# EUROPEAN PATENT APPLICATION

(11) **EP 4 764 409 A1**
(43) Date of publication of application: **24.06.2026**
(21) Application number: 24221733.9
(22) Date of filing: 19.12.2024
(51) Int. Cl.: G01C 21/00

(54) **MAP UPDATE**

(71) Applicant: HERE Global B.V., 5611 ZT Eindhoven (NL)
(72) Inventor: Sazonov, Vladimir, 60599 Frankfurt (DE); Richter, Jan Peter, 65510 Idstein (DE); Lauer, Johannes, 65760 Eschborn (DE); Kielbratowski, Pawel, 81572 Gdynia (PL)
(74) Representative: Sariot, Eray

(57) **Abstract**

Methods, apparatuses and computer program products for updating map data are disclosed. The method for updating a map comprises obtaining first map data to be updated, obtaining second map data to be used for updating the first map data, determining a matched second map road segment of a road of the second map data matched to a corresponding matched first map road segment of a road of the first map data, registering the matched second map road segment to the matched first map road segment; and updating the first map data by updating the first map road segment.

## Description

### TECHNOLOGICAL FIELD

The present disclosure is related to but not limited to maps and map data representing maps, in particular to updating maps and/or map data.

### BACKGROUND

Maps, in particular of geographical areas, in particular comprising information on roads, are of widespread use across many applications such as navigation, logistics, control of vehicles, city development, agricultural applications, infrastructure development, to name but a few examples. A particularly relevant type of mapped geographical feature are roads. A map may comprise and/or correspond to a road network.

As maps represent geographical areas, there typically exists a discrepancy between the map and the represented features of the mapped area. This is for instance caused by an abstraction applied in representing an area, by imprecisions or gaps of (e.g., and/or unmapped areas within) the map and/or by (e.g., continuous) changes of the respectively mapped area. To reduce such discrepancies, existing maps may be updated.

### SUMMARY OF SOME EXEMPLARY EMBODIMENTS

It has been recognized that existing maps (e.g., base road networks) may be enhanced using external sources of map data (e.g., road geometries). Thereby, the positional accuracy of the resulting map data (e.g., digital road network) may be improved, e.g., by aligning existing and new data within a so called conflation process. Conflation denotes the process of combining map data from at least two separate sources in order to create updated map data that is better than either source on its own.

It has further been recognized that that a scenario may appear in which a first map (e.g., called base map) is topologically correct, but may be at least partially positionally inaccurate and/or outdated. Additionally, another map (e.g., called input map) may have a higher (e.g., compared to the base map) positional accuracy of at least parts of a same mapped area and/or fresher (e.g., more recent) information, yet may comprise topological issues (e.g., gaps and/or wrong crossings).

A solution to such a scenario may have important applications such as for instance, integrating information from positioning satellite (e.g., GPS, GLONASS, GALILEO) probes, information on roads recognized from satellite images, Light Detection and Ranging, LiDAR, survey information and/or combinations thereof, into existing maps and/or updating existing maps using such information sources.

It has been recognized, for instance, that in case of map data from positioning satellites (e.g., GPS), the data may be noisy, yet reliable geometry data may still be obtained by combining multiple GPS probes and/or filtering outliers. After such processing, a topologically incomplete and/or incorrect, yet positionally precise dataset may be obtained. Updating existing map data based on such new data may be difficult, however.

Known methods were recognized to not handle such a combination of two maps of complementary accuracies for map update purposes well. In particular, traditional methods of creating map data (e.g., road geometry) from measurements (e.g., triangulation or traversing) do not cover the above mentioned update scenario. It is known that computationally expensive approaches such as Kalman filters may allow to correct trajectories using observations. Yet, none of the known approaches offer a targeted approach for updating a given first base map using topologically inferior but positionally more accurate second map data.

It is thus one of the objects of the present disclosure to enable an update of a first, topologically correct, yet positionally inaccurate and/or outdated map using a second, topologically flawed, yet positionally more accurate and/or more recent map. Further, it may be desirable to enable iterative handling of (e.g., frequent) updates, e.g., with a smooth and/or continuous alignment of the first (e.g., base) map to the second (e.g., input map) without compromising the first map, e.g., without disrupting the existing road network of the first map or even producing a damaged base road network of the first map.

According to a first example aspect, a method (e.g., a computer-implemented method) for updating a map is proposed, comprising
- obtaining (e.g., holding available, retrieving from memory, determining, receiving) first map data (e.g., of a first map, e.g., of a part of a first map) (e.g., comprising at least one road) to be updated;
- obtaining (e.g., holding available, retrieving from memory, determining, receiving) second map data (e.g., of a second map, e.g., of a part of a second map) (e.g., corresponding to a same and/or at least partially overlapping geographical area as the first map data) (e.g., specifying at least one part of a road) to be used for updating the first map data;
- determining a (e.g., one or more) matched second map road segment of a road of the second map data (e.g., a coherent piece of a road, e.g., adjacent to and/or between unmatched road segments (e.g., gaps) in the first and/or second map road), wherein the matched second map road segment is matched to a (e.g., one or more and/or by a one-by-one matching of first and second road segments) corresponding matched first map road segment of a road of the first map data (e.g., by matching location, shape, size, road type and/or combinations thereof) (e.g., wherein matched first and/or second map road segments are free of junctions and/or nodes);
- registering (e.g., as part of the matching or as a separate, subsequent step) the matched second map road segment to the matched first map road segment to obtain a set of registered point pairs, wherein a respective point pair of the set of registered point pairs comprises a first point on the matched first map road segment and a second point on the matched second map road segment;
- for the point pairs (e.g., all or a subset) of the set of point pairs (e.g., wherein a point is defined in 2D or 3D),
   - determining a respective point distance (e.g., absolute, e.g., in a measure of distance such as e.g. meter or feet) between the first point and the second point of the point pair,
   - determining a correction factor (e.g., between 1 and a minimum correction factor, e.g., 0.5) as a monotonically (e.g., simple monotonic, not strict) decreasing magnetic function of the point distance,
   - determining an updated first point position by interpolating between the first point and the second point based on the correction factor (e.g., updated first point = first point + (second point - first point) multiplied by correction factor), and
   - updating (e.g., point-by-point or after updating (e.g., all of) the points of the set of point pairs) the first map data by updating the first map road segment by replacing the first point position with the updated first point position.

This method may for instance be performed and/or controlled by an apparatus, for instance a server. Alternatively, this method may be performed and/or controlled by more than one apparatus, for instance a server cloud comprising at least two servers. Alternatively, the method may for instance be performed and/or controlled by an electronic device, e.g. a node in a communication system and/or by a terminal device, e.g., a user equipment (UE). For instance, the method may be performed and/or controlled by using at least one processor of the electronic device.

According to a further example aspect, a computer program is disclosed, the computer program when executed by a processor causing an apparatus, for instance a server, a network node or a terminal device, e.g., a UE, to perform and/or control the actions of the method according to the first example aspect.

The computer program may be stored on computer-readable storage medium, in particular a tangible and/or non-transitory medium. The computer readable storage medium could for example be a disk or a memory or the like. The computer program could be stored in the computer readable storage medium in the form of instructions encoding the computer-readable storage medium. The computer readable storage medium may be intended for taking part in the operation of a device, like an internal or external memory, for instance a Read-(e.g., Only) Memory (ROM) or hard disk of a computer, or be intended for distribution of the program, like an optical disc.

According to a further example aspect, an apparatus is disclosed, configured to perform and/or control or comprising respective means for performing and/or controlling the method according to the first example aspect.

The means of the apparatus can be implemented in hardware and/or software. They may comprise for instance at least one processor for executing computer program code for performing the required functions, at least one memory storing the program code, or both. Alternatively, they could comprise for instance circuitry that is designed to implement the required functions, for instance implemented in a chipset or a chip, like an integrated circuit. In general, the means may comprise for instance one or more processing means or processors.

The above-disclosed apparatus according to any aspect may be a module or a component for a device, for example a chip. Alternatively, the disclosed apparatus according to any aspect may be a device, for instance a server or server cloud. The disclosed apparatus according to any aspect may comprise (e.g., only) the disclosed components, for instance means, processor, memory, or may further comprise one or more additional components.

A terminal device, e.g., a user equipment (UE), may for instance correspond to a mobile device such as for example a mobile phone, tablet, smartwatch, a laptop, a Personal Digital Assistant (PDA) device, a wearable, an Internet-of- Things (IOT) device, an IIOT (Industrial IOT) device, a vehicle and/or combinations thereof. Such a user equipment may also be referred to as user device.

A network node may correspond to a component of a communication network such as for instance a Base Transceiver Station (BTS), a nodeB, an evolved node B (eNB), a Next Generation NodeB (gNB), a distributed unit (DU), a central unit (CU) and/or combinations thereof.

The method may be computer-implemented. The method may serve the purpose of updating a map, in particular first map data, in particular using second map data.

First map data is obtained. For instance, such obtaining may take the form of holding available, retrieving from memory, determining (e.g., based on further information), receiving (e.g., over a communication network), and/or combinations thereof. The first map data may represent and/or correspond to a first map, e.g., of a part of a first map. The first map data and/or the first map may comprise at least one road and/or at least one road network. The first map data may be updated in the process of the method according to the first example aspect. For instance, the first map data may be obtained in order to be updated.

The method further comprises obtaining (e.g., holding available, retrieving from memory, determining, receiving and/or combinations thereof, e.g., in the same or in a different way compared to the first map data) second map data. The second map data may be obtained jointly with or separately from the first map data. The second map data comprises and/or represents a second map, e.g., of a part of a second map. The second map data may relate to, represent and/or be based on a same and/or an at least partially overlapping geographical area compared to the first map data. For instance, both first and second map data may comprise information on a same actual road network and/or may comprise information about at least one same road. In particular, the second map data may comprise information (i.e., positional and/or topological) about at least one part of at least one road which is also represented by the first map data. The second map data is usable for updating the first map data.

The second map data may be positionally at least partially (e.g., for at least a part of at least one road) more accurate compared with the first map data. The second map data may be topologically at least partially (e.g., for at least a part of at least one road, e.g., the same road) less accurate compared with the first map data.

The first (and/or the second) map data may represent geographical structures such as roads by means of joint representations of positional information and topological information such as for instance graphs comprising nodes and edges, e.g., wherein nodes are defined in (e.g., absolute, e.g., within a global coordinate system) coordinates, e.g., wherein edges are straight lines connecting the nodes. The (first and/or the) second map may represent geographical structures such as roads by means of primarily positional information such as for instance sets of points, wherein a given point is defined in (e.g., absolute, e.g., within a global coordinate system) coordinates. For instance, the second map data may comprise (e.g., mutually unconnected) fragments of roads, so called spaghetti. The second map data may be free of indications of crossings (e.g., points corresponding to two or more roads may come close to one another and/or may overlap, yet the second map data may not specify whether or not a crossing is present or alternatively, for instance, the roads are simply close to one another and/or are located on different levels (e.g., in the case of bridges)).

The first and/or second map data may be defined in a two-dimensional or a three-dimensional coordinate system.

The method further comprises determining a (e.g., one or more) matched second map road segment of a road of the second map data. The matched second map road segment may for instance correspond to and/or comprise a coherent (e.g., gap-free) piece of a road. The matched second map road segment may for instance be adjacent to and/or be located between (e.g., two) unmatched road segments (e.g., gaps) in the first and/or second map road.

The matched second map road segment is matched to a (e.g., one or more and/or in a one-by-one matching of first and second road segments) corresponding matched first map road segment of a road of the first map data. Thus, for at least a part of a road (e.g., or an entire road) within the first map data and/or the second map data, a respective matched segment is identified. The matched segments are for instance determined to correspond to the same actual road (e.g., within a mapped geographical area). The matching may be based on (e.g., the road segments are matched by) at least one of a road segment location, shape, size, road type and/or combinations thereof. For instance, a matching algorithm may compare (e.g., by a distance metric) points of the second map data (e.g., within a (e.g., global) coordinate system) with points of road segments within the first map data and may decide for points close enough to the road segment of the first map data that a matching point has been determined.

For instance, matched first and/or second map road segments are free of junctions, crossings and/or nodes. Thus, matched first and/or second map road segments may be represented by a graph comprising nodes with at most two edges respectively, i.e., no nodes with three edges or more.

The method further comprises registering the matched second map road segment to the matched first map road segment (e.g., or vice versa) to obtain a set of registered point pairs. A respective point pair of the set of registered point pairs comprises a first point on the matched first map road segment and a second point on the matched second map road segment. A distance between two consecutive two first points of the set of registered point pairs may vary across first points. A distance between two consecutive two second points of the set of registered point pairs may vary across second points. The registering may be performed as part of the matching above and/or as a separate, subsequent step. The registering may be based on the matching.

A registration may be required as the matched first and second map road segments are not shaped necessarily parallel to one another but may have deviating, curved geometries wherein it may not be unambiguously decidable for any given point on a respective matched (first or second) map road segment, to which point on the respective other matched (second or first) map road segment it corresponds. For instance, assuming that the matched first map road segment is straight in space (e.g., or rectifying it by warping space) a matched second map road segment will have a shape varyingly deviating from the shape of the matched first map road segment and may thus cover varying distances per distance on the first segment. The registering may be performed to create a correspondence between the matched first and second map road segments, e.g., in a single coordinate system. For instance, the registration may provide a transformation rule wherein any given point on the matched second map road segment is mapped onto a point on the matched first map road segment, e.g., with minimal error. To this end, a transformation may be applied to the matched second (e.g., and/or first) map road segment, e.g., in the form of a linear transformation of the (e.g., two dimensional) coordinates of the matched second map road segment (e.g., (x', y') = (Ax + By + C, Dx + Ey + F), wherein (x, y) are untransformed coordinates and (x', y') are the registered coordinates) or a polynomial transformation (e.g., (x', y') = (Ax + By + Cx² + Dy² + Exy + F, Gx + Hy + Ix² + Jy² + Kxy + L)). Different transformations are possible. The transformation may be used to transform a given point on the matched (first or) second map road segment onto the matched (second or) first map road segment and thereby identify the point pairs.

The method further comprises, for the point pairs (e.g., for all point pairs or for a subset of point pairs) of the set of point pairs to determine a respective point distance, determine a correction factor, determine an update first point position and updating the first map data. In detail:
Determining a respective point distance between the first point and the second point of the point pair may be performed by calculating a difference vector between the points (e.g., in 2D or 3D) and computing a length of the difference vector. A distance may for instance be determined in an absolute measure, e.g., in a measure of distance such as e.g. meter or feet. A distance may alternatively be determined relative, e.g., in relation to a predefined (e.g., expected and/or accepted) distance.

Determining a correction factor may be performed based on a monotonically (e.g., simple monotonic, not strictly monotonic) decreasing magnetic function of the point distance. The correction factor may take values between a maximum value (e.g., 1) and a minimum value (e.g., 0.5). The minimum value may be defined relative to the maximum value as, e.g., at most or at least 70%, 60%, 50%, 40%, or 30%. The monotonically decreasing magnetic function may thus assume the maximum value (e.g., 1) for a point distance of zero (0), i.e., if the first point and the second point of the point pair, i.e., the matched first map road segment and the matched second map road segment coincide in the respective position. With increasing distance, the correction factor either stays constant or decreases. The monotonically decreasing magnetic function is termed "magnetic" because it comprises a plateau-phase in an interval of the distance between 0 and a first distance threshold, wherein the monotonically decreasing magnetic function assumes the maximum value. This reflects the assumption that the second map data is positionally more accurate than the first map data. Thus, in case of comparably small inconsistencies between the two map versions, the second map data should (e.g., fully) replace the first map data. A high correction factor signifies a high impact of the second map data onto the first map data.

The determining of an updated first point position is achieved by interpolating between the first point and the second point based on the correction factor. The higher the correction factor, the stronger the influence of the second point (i.e., the second map data) onto the first point (i.e., the first map data). The interpolation may be performed linearly. For instance, the updated first point may be determined as the first point + (second point - first point) multiplied by correction factor (i.e., x₁' = x₁ + (x₂ - x₁) · c, with x'₁ updated first point, x₁ first point, x₂ second point and c correction factor). For instance, if the correction factor c is set to a maximum value of 1 (e.g., for distances (x₂ - x₁) below a threshold dₜₕ), the updated first point will be set to the second point x₂. For a correction factor c of 0.5, the x₁' will be (x₁ + x₂)/2, i.e., the average across the two points.

Updating the first map data may be achieved by updating the matched first map road segment (and thereby the first map road segment). Updating the map road segment is achieved by replacing the first point position with the updated first point position. Such replacing may for instance be performed point-by-point, e.g., after updating a single point, the map road segment is updated as well. Alternatively, the updated first point positions are determined for the set of point pairs and after such updating of (e.g., all of) the first points of the set of point pairs, the matched first map road segment is updated.

According to an embodiment of the first example aspect,
- the first map data and the second map data at least partially represent a same geographical area (e.g., represent mutually overlapping geographical areas),
- the first map data has a higher topological correctness than the second map data (e.g., less gaps, more correct junctions), and/or
- the first map data has lower positional accuracy and/or is outdated with respect to the second map data.

Based on the first and second map data representing a same geographical area (e.g., at least partially overlapping areas), the information on such a geographical area of the first and second map data can be combined in order to achieve an improved representation of the geographical area by the updated first map.

The first map data may have higher topological correctness compared to the second map data. For instance, such topological correctness may correspond to few gaps, correct junctions, correct crossing types (e.g., roundabouts vs traffic lights), correct road types (e.g., bicycle lane vs road for cars), and/or combinations thereof. At the same time, the first map data may be less positionally accurate compared to the second map data, at least regarding some represented areas. For instance, the first map data may represent a consolidated combination of various sources of information so that it correctly reflects a topology of a (e.g., large) geographical area and thus may comprise badly represented areas which deviate from reality.

The first map data may have lower positional accuracy and/or may be outdated with respect to the second map data. Positional accuracy in particular may refer to a precise positioning and/or a precise sizing of mapped elements, in particular roads. The second map data may be particularly accurate regarding such positional information, e.g., based on sensor data. Yet, the second map data may be incomplete and/or comprise erroneous topological information, e.g., wrong and/or missing crossings or junctions, incorrect crossing types, incorrect or unknown road types, and/or combinations thereof. The second map data may be more up-to-date compared to the first map data. For instance, the second map data may be based on recently acquired sensor data. By being more up-to-date, the second map data may for instance be representative of recent changes to the mapped geographical area, in particular changes to a mapped road network, for instance new roads, crossings, current road works, and/or combinations thereof.

According to an embodiment of the first example aspect,
- the second map data is based on at least one of a GPS probe, a satellite image, or a light detection and ranging, Lidar, survey, and/or
- the second map data is unstructured and/or topologically inconsistent and/or comprises fragments of roads (e.g., multiple fragments of a single road; e.g., fragments separated by gaps)(e.g., wherein a given fragment is free of junctions).

The second map data may be based on sensor data from at least one or from multiple sensors. Such sensors may for instance comprise at least one of a GPS probe (e.g., mounted on a vehicle and/or a mobile device carried by a vehicle and/or by a person such as a bicyclist or a pedestrian), a satellite image (e.g., processed by an image processing algorithm to extract road geometries), or a light detection and ranging, Lidar, survey (e.g., by a car, e.g., a self-driving and/or at least assisted driving vehicle), and/or combinations thereof.

The second map data may be unstructured. For instance, the second map data may not in itself devise map elements such as for instance roads, crossings, sidewalks and/or combinations thereof but may instead comprise map elements (e.g., points and/or sets of points) are open to interpretation and may or may not relate to and/or be mappable to roads of the first map data. The first map data may for instance be topologically inconsistent, e.g., comprise open-ended roads, roads with gaps, missing crossings, roads not connected to a crossing the lead to, roads connected to a subset of roads connected to a crossing but not all, unconnected orphan roads or road networks and/or combinations thereof. The first map data may comprise fragments of roads, for instance multiple fragments of a single road and/or fragments separated by gaps. For instance, a given fragment may be free of any junction. E.g., the fragments may be junctionless so called spaghetti which may be represented by a graph comprising nodes with only a maximum of two connected edges.

According to an embodiment of the first example aspect, the correction factor is at least one of
- set to a (e.g., constant and/or distance-independent) maximum correction factor (e.g., 1) for a point distance below a first point distance threshold,
- set according to a (e.g., strictly) (e.g., linearly, quadratically, polynomic, logarithmic, and/or exponential) (e.g., offset by the maximum value) decreasing function of the point distance for a point distance above the first threshold (e.g., and below a second threshold),
- set to a (e.g., constant and/or distance-independent) minimum correction factor (e.g., at most or at least 0.1, 0.2, 0.3, 0.4, 0.5, 0.6, or 0.7) for a point distance above a second point distance threshold (e.g., wherein the second point distance threshold is larger than the first point distance threshold), or
- set according to a piecewise decreasing (e.g., linear) function of the point distance.

The correction factor determines the degree to which the second map data influences the updated first map data in the matched first map data road segment. The correction factor is set according to the monotonically decreasing magnetic function of the point distance between the first and the second point of a given point pair. When in the following a certain way of setting the correction factor is disclosed, this in particular refers to a way in which the monotonically decreasing magnetic function is formed.

The correction factor may be set to a (e.g., constant and/or distance-independent) maximum correction factor (e.g., 1) for a point distance below a first point distance threshold. Such a design of the monotonically decreasing magnetic function achieves the so-called magnetic property of the correction by which the second map data replaces the first map data in the updated first map data in case of a small distance (i.e., first point distance threshold) between the to road segments. The first point distance threshold determines, until which distance between the first and the second point such replacement of the original first map data is performed.

For instance, the correction factor may be set according to a function (the monotonically decreasing magnetic function) defined by point distance intervals, wherein the function is continuous (i.e., has no abrupt jumps in value) across the point distance (e.g., across all possible values of point distances). For instance, at least one of the respective functions for different point distance intervals may be offset by an offset-value and/or scaled by a factor, e.g., in order to achieve continuity across intervals.

The correction factor may additionally or alternatively be set according to a (e.g., strictly) (e.g., linearly, quadratically, polynomic, root-based, logarithmic, exponential, and/or combinations thereof) decreasing function for a point distance above the first threshold (e.g., and below a second threshold). The correction factor may be set according to multiple such decreasing functions for consecutive intervals of the point distance and may e.g., additionally comprise at least one plateau. For instance, the function may be offset by the maximum value in order to achieve a continuous continuation of the monotonically decreasing magnetic function at the first point distance threshold.

The correction factor may additionally or alternatively be set according to a (e.g., constant and/or distance-independent) minimum correction factor (e.g., at most or at least 0.1, 0.2, 0.3, 0.4, 0.5, 0.6, or 0.7) for a point distance above a second point distance threshold. The second point distance threshold may be larger than the first point distance threshold. In a preferred embodiment, the correction factor may be set to a minimum correction factor of 0.5 for (e.g., any) point distances above the second point distance threshold. Thus, the updated first point is always adjusted towards the second point of a given point pair, yet the influence is kept moderate. If the minimum correction factor is set to a value smaller than 0.5, the second point has a lower influence on the updated first point position than the first (non-updated) point position.

The correction factor may additionally or alternatively be set according to a piecewise decreasing function of the point distance. For instance, a given piece may be defined for a point distance interval (e.g., between the first and the second threshold or for instance; e.g., more thresholds may be defined in-between and between such finer-grained intervals, the given piecewise decreasing function may be defined, respectively). For instance, for a given piece (e.g., point distance interval), the piecewise decreasing function may be defined as a linear, quadratic, polynomic, root-based, logarithmic, exponential, and/or combinations thereof function. Different pieces of the piecewise decreasing function (for different intervals of the point distance) may be defined using different types of functions and/or same types of functions using mutually different parameters for different intervals.

According to an embodiment of the first example aspect, the method further comprises
- evaluating the updated first map data according to a quality evaluation function, in particular wherein the quality evaluation function at least one of
   - is based on a shape of to the updated first map road segment, a shape of the matched first map data road segment and/or a shape of the matched second map data road segment, in particular comprises a (e.g., one-by-one) comparison between a shape of to the updated first map road segment, a shape of the matched first map data road shape and/or a shape of the matched second map data road shape;
   - is evaluated at least twice for a respective updated first map road segment, wherein the at least two respective updated first map road segments are obtained based on mutually different magnetic functions (e.g., wherein the evaluation is repeated across multiple test-cases (e.g., updated road segments));
   - is based on at least one penalty (e.g., on shapes of roads) on at least one of
      - sharp angles,
      - wobbles, or
      - curvatures.

The updated first map data may be evaluated according to a quality evaluation function. The quality evaluation function may take a segment of a road as an input and analyze the segment in order to determine how well the given segment is suited to represent a road. For instance, the quality evaluation function may be based properties of the road segment (e.g., morphological properties) which may then be compared to predefined reference values (e.g., desired) values. Given on such a comparison, the quality of the road segment may be determined. The quality evaluation may additionally or alternatively be based on data representing well-mapped and/or ill-mapped (e.g., badly mapped) roads. E.g., if a road segment to be evaluated has similar (e.g., morphological) properties to road segments in previous map data that are known to be well-mapped, the evaluated segment may also be evaluated as being well-mapped. On the contrary, if a road segment is rather similar to an ill-mapped road segment, it may also be ill-mapped. For instance, additionally or alternatively, the desired reference values of properties of road segments to be evaluated may be set based on such data. To this end, features of (e.g., well-mapped and/or ill-mapped) map data (e.g., road segments) may have been computed (e.g., relating to morphological properties of the road segments of such data) and may subsequently serve as a reference for road segments to be evaluated. Alternatively, the reference values may be set manually, e.g., based on experience and/or based on simulations and/or based on capabilities of vehicles.

The quality evaluation function may be based on a shape of to the updated first map road segment. Additionally or alternatively, the quality evaluation function may be based on a shape of the matched first map data road segment. Additionally or alternatively, the quality evaluation function may be based on a shape of the matched second map data road segment. The quality evaluation function may in particular comprise a (e.g., one-by-one) comparison between a shape of to the updated first map road segment, a shape of the matched first map data road shape and/or a shape of the matched second map data road shape. If for instance, it is determined that the updated first map road segment has become less smooth compared to the original first map road segment, the quality function of the updated first map road segment may evaluate to a low quality. The quality evaluation function may be applied to (e.g., a segment of) the second map data. Thereby, it may be determined whether the second map data (which may, for instance match the first map data and can be registered to the first map data) is suitable to update the first map data. E.g., if the quality of the second map road segment is evaluated to be below a certain threshold, the update may not be performed and/or the corresponding matched second map road segment is discarded.

The quality evaluation function may be evaluated at least twice for a respective updated first map road segment, wherein the at least two respective updated first map road segments are obtained based on mutually different (monotonically decreasing) magnetic functions. The quality evaluation function may thus be used not only to evaluate the quality of a (e.g., updated first, first or second) road segment but additionally or alternatively to evaluate the monotonically decreasing magnetic function. For instance, the evaluation of the updated first map road segment may be repeated, e.g., across multiple test-cases (e.g., updated first road segments) for a given monotonically decreasing magnetic function and across different monotonically decreasing magnetic functions. Thereby, particularly successful monotonically decreasing magnetic functions may be selected and subsequently used for updating the first map data.

The quality evaluation function may be based on is based on at least one penalty (e.g., of, alternatively, a reward). The penalty may penalize (and/or the reward may reward) at least one (e.g., morphological) property of a road segment. For instance, at least one of sharp angles (e.g., an angle between two part of a given road segment of less than 120°, 110°, 100°, 90°, 80°, 70°, or 50° (e.g., wherein an angle of 180° means a straight road without turn)) may be penalized, a wobble (e.g., an abrupt direction change and/or displacement of the road segment (e.g., perpendicularly to a longitudinal direction of the road segment) may be penalized, and/or curvatures (e.g., a curve radius below 20m, 15m, 10m, 5m, 4m, 3m, or 2m) may be penalized.

According to an embodiment of the first example aspect, the method further comprises
- determining at least one (e.g., or two) unmatched first (e.g., and/or second) road segment adjacent to the matched first (e.g., and/or second) road segment (e.g., wherein the unmatched first road segment is not matched to any road segment of the second map data).

More often than not a matched first road segment is surrounded by two or is adjacent to at least one unmatched road segment. As second map data typically comprises partial road segments and/or a matching and/or a registration is not successful, only a part of the roads of the first map data will have a first road segment with a matching second road segment. As the unmatched first map road segment is not updated (other than the matched first map road segment), there may appear a (e.g., sharp) transition between the matched and therefore updated first map road segment and the unmatched first map road segment.

According to an embodiment of the first example aspect, the method further comprises
- (e.g., updating the first map data and/or the unmatched first road segment by) smoothing a transition between the matched first road segment and the at least one unmatched first road segment, in particular wherein
- the matched first road segment is left unchanged by the smoothing and/or the smoothing is applied (e.g., only) to the at least one unmatched first road segment;
- the smoothing is based on (e.g., performed in a way to satisfy) at least one maximum allowed shape value, wherein the maximum allowed shape values comprise at least one of a maximum allowed angle (e.g., angle between a part of the smoothed unmatched first road segment and a corresponding part of the (e.g., non-smoothed) unmatched first road segment)(e.g., wherein the maximum allowed angle is at most or at least 5°, 10°, 15°, 20°, 25° or 30°) or a maximum allowed smoothing distance (e.g., measured from a transition between unmatched and matched first road segment to an end of the smoothed part of the unmatched first road segment) (e.g., wherein the maximum allowed smoothing is at most or at least 5m, 10m, 15m, 20m, 25m, 30m, 40m, or 50m);
- the update of the first road segment is discarded in case the smoothing fails to comply with the at least one maximum allowed shape value (e.g., such that the matched second map road segment is discarded and/or not used for updating the first map data).

The method may further comprise smoothing a transition between the matched (and thus updated) first road segment and the at least one unmatched first road segment. The smoothing may be performed as part of the updating of the first map data, e.g., wherein the updating of the first map data comprises the smoothing and/or wherein not only the matched first map road segment is updated but also at least a part of the unmatched first road segment (e.g., a transition of the unmatched first road segment section to an adjacent matched first road segment section) by means of the smoothing.

For instance, the matched first map road segment is left unchanged by the smoothing and/or the smoothing is applied (e.g., only) to the at least one unmatched first map road segment. Additionally or alternatively, the unmatched first map road segment is left unchanged by the smoothing and/or the smoothing is applied (e.g., only) to the at least one matched first map road segment.

For instance, the smoothing is based on (e.g., performed in a way to satisfy) at least one maximum allowed shape value (e.g., value of a morphological property of the (e.g., to be) smoothed road segment). The maximum allowed shape value may comprise at least one of a maximum allowed angle (e.g., angle between a first part of the smoothed road segment and an adjacent part of the smoothed road segment. For instance, the smoothing is performed in a way to achieve an angle between consecutive road segments or at most the maximum allowed angle. The maximum allowed angle may also be considered between a first part of the smoothed road (e.g., unmatched first road segment) and a corresponding part of the (e.g., non-smoothed) unmatched first road segment. For instance, the maximum allowed angle is at most or at least 5°, 10°, 15°, 20°, 25° or 30°. Additionally or alternatively, smoothing may be based on and/or performed to satisfy a maximum allowed smoothing distance (e.g., measured from a transition between unmatched and matched first road segment to an end of a smoothing zone (e.g., the smoothed part of the unmatched first road segment)). For instance, the maximum allowed smoothing distance is at most or at least 5m, 10m, 15m, 20m, 25m, 30m, 40m, or 50m.

For instance, the update of the first road segment is discarded (i.e., the matched first map road segment as well as adjacent unmatched road segments in the area of the transition between the matched and the unmatched road segments) may be left unchanged in case the smoothing fails to comply with the at least one maximum allowed shape value (e.g., such that the matched second map road segment is discarded and/or not used for updating the first map data).

For instance, in case the smoothing is not successful, the matched first and second map road segment may be shortened to create a different transitioning point between matched and unmatched parts of the matched first map road segment. The smoothing may then be attempted again and the first map updated in case the smoothing is successful.

According to an embodiment of the first example aspect, the method further comprises
- repeating the actions of the method, wherein the updated first map data is used as the first map data and a new third map data (e.g., different from the second map data already considered) is used as the second map data.

For instance, the method according to the first example aspect may be repeated. For instance, this may be done if new data becomes available and the already updated first map data may be updated again. Herein, the updated first map data may be used as the first map data and a new third map data (e.g., different from the second map data already considered) may be used as the second map data.

The proposed method is thus suited to an iterative updating of map data while integrating more and more detailed positional information into a consolidated, topologically correct map.

According to an embodiment of the first example aspect, the method further comprises
- determining whether the first road segment and the second road segment cross one another in at least two crossing points and if yes, setting the correction factor to the maximum correction factor (e.g., 1) for at least one (e.g., any) part of the first (e.g., and second) map road segment between (e.g., any two of) at least two consecutive of the crossing points.

For instance, the method may further comprise a determining whether the (matched) first road segment and the (matched) second road segment cross one another in at least two crossing points, i.e., without gaps in the road segments between such crossing points. In case such at least two crossing points exist, the correction factor may be set to a (e.g., the) maximum correction factor (e.g., 1) for at least one part (e.g., or all parts) of the (matched) first (e.g., and second) map road segment between (e.g., any two of) at least two consecutive of the crossing points. For instance, in case there are two or more crossing points within the matched first and second map road segments, the matched first map road segment will be updated to the matched second road segment. Such updating may be performed regardless of the point distance between the first and second map road segment. It has been recognized that, because the second map data is considered more positionally accurate than the first map data, crossings between the first and second road segment indicate a close match and are likely caused by deviations between the first map data and the actual geographic reality.

According to an embodiment of the first example aspect,
- determining the correction factor is exclusively based on the first and second map data (e.g., and the magnetic function) (e.g., independent of a correction history; e.g., unlike Kalman-filter-based approaches).

The proposed solution is simple, yet surprisingly effective in integrating new positional information into an existing map. Only the first and second map data need to be considered and are joined using the monotonically decreasing magnetic function.

According to a second example aspect, a map services provision apparatus (e.g., a server) is proposed comprising means for performing and/or controlling the method according to the first aspect.

According to an embodiment of the second example aspect, the map services provision apparatus further comprises
- means for providing at least one map service based on the updated first map data (e.g., the updated first map data itself and/or at least one route determined based on the updated first map data) to a map services consumer apparatus (e.g., in response to a corresponding request from the map services consumer apparatus).

The map services provision apparatus may comprise means for providing at least one map service based on the updated first map data. For instance, the map services provision apparatus may thus first update the map and subsequently provide the map service based on the updated map to a map services consumer apparatus. The map service may for instance comprise and/or correspond to a provision of the updated first map data itself. Additionally or alternatively, map service may for instance comprise and/or correspond to a provision of least one route determined based on the updated first map data. For instance, the at least one map service may be provided in response to a corresponding request, e.g., originating from the map services consumer apparatus. The request may for instance be obtained (e.g., received) by the map services provision apparatus prior to providing the map service.

According to a third example aspect, a map services consumer apparatus (e.g., a mobile device, e.g., a user equipment) comprising means for performing and/or controlling the method according to first aspect.

According to an embodiment of the third example aspect,
- the second map data is collected at least partially by (e.g., at least one sensor of) the map services consumer apparatus (e.g., by use of a GPS sensor, an acceleration sensor, a camera, a wireless transceiver, an ultrasound sensor and/or combinations thereof).

The map services consumer apparatus may for instance update the map data based on sensor data which it collected itself. For instance, second map data (e.g., or sensor data to determine the second map data from) is collected at least partially by (e.g., at least one sensor of) the map services consumer apparatus itself. For instance, such a sensor may comprise a GPS sensor, an acceleration sensor, a camera, a wireless transceiver (e.g., WLAN-module, cellular transceiver), an ultrasound sensor and/or combinations thereof.

Additionally or alternatively, the map services consumer apparatus may collect sensor data and/or second map data and provide it to a map services provider apparatus (e.g., according to the second example aspect).

According to an embodiment of the third example aspect, map services consumer apparatus
- further comprising means for determining at least one route based on the updated first map data.

The map services consumer may be configured to determine at least one route based on the updated first map data. For instance, the map services consumer may compute the route itself. Additionally or alternatively, the map services consumer may request a route from a map services provider (e.g., according to the second aspect) and obtain the route from the map services provider in response.

According to a fourth example aspect, a computer program is proposed comprising instructions, which, when executed by an apparatus, cause the apparatus to perform the method of the first example aspect.

According to a fourth example aspect, a computer-readable storage medium is proposed having stored thereon the computer program of the fourth example aspect.

The features and example embodiments of the invention described above may equally pertain to the different aspects according to the present invention.

It is to be understood that the presentation of the invention in this section is merely by way of examples and non-limiting.

Other features of the invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not drawn to scale and that they are merely intended to conceptually illustrate the structures and procedures described herein.

### BRIEF DESCRIPTION OF THE DRAWINGS

In the figures show:
- Fig. 1: a schematic visualization of map data according to all exemplary aspects of the present invention;
- Fig. 2: a schematic visualization of updating a map segment according to all exemplary aspects of the present invention;
- Fig. 3: a schematic visualization of registering a first and a second map segment according to all exemplary aspects of the present invention;
- Fig. 4a-d: a schematic visualization of registering a first and a second map segment according to all exemplary aspects of the present invention;
- Fig. 5: a schematic visualization of updating a first map segment according to all exemplary aspects of the present invention;
- Fig. 6: a schematic visualization of updating a first map segment according to all exemplary aspects of the present invention;
- Fig. 7a-d: a schematic visualization of monotonically decreasing magnetic functions according to all exemplary aspects of the present invention;
- Fig. 8: a schematic visualization of updating a first map segment according to all exemplary aspects of the present invention;
- Fig. 9a,b: a schematic visualization of smoothing according to all exemplary aspects of the present invention;
- Fig. 10a,b: a schematic visualization of updating a first map segment according to all exemplary aspects of the present invention;
- Fig. 11a,b: a schematic visualization of updating a first map segment according to all exemplary aspects of the present invention;
- Fig. 12a,b: a schematic visualization of a quality evaluation function a first map segment according to all exemplary aspects of the present invention;
- Fig. 13: a flowchart showing an example embodiment of a method according to the first exemplary aspect of the present invention;
- Fig. 14: a schematic block diagram of an apparatus configured to perform the method according to the first exemplary aspect of the present invention, for instance according to the second and/or third aspect; and
- Fig. 15: a schematic illustration of examples of tangible and non-tangible storage media according to the present invention.

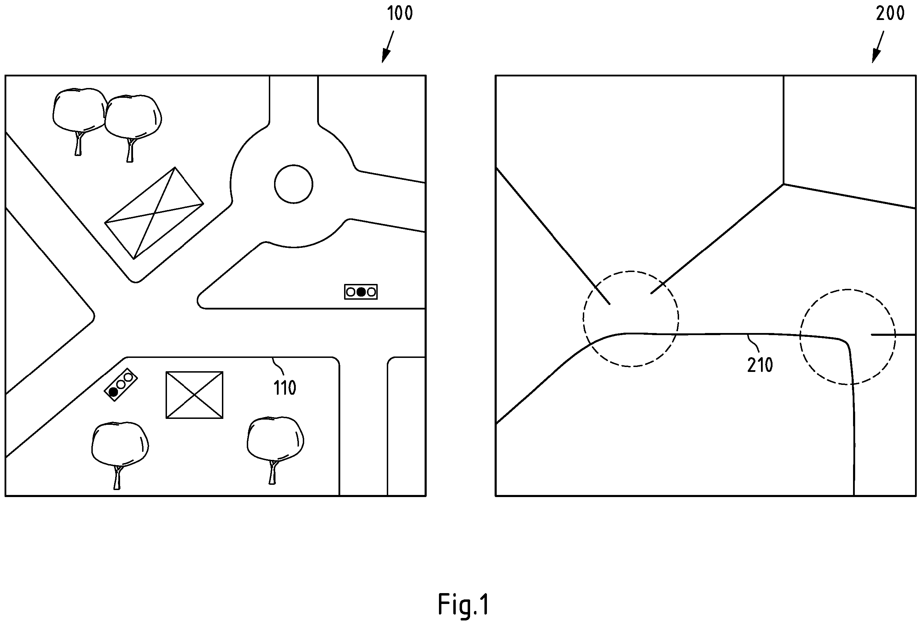

Fig. 1 demonstrates first map data 100 and second map data 200. The first map data 100 on the left is detailed including information on traffic lights as well as types of crossings (e.g., crossing vs roundabout). The first map data 100 is considered topologically correct, i.e., the crossings and number of roads displayed are correctly mapped to a geographical area represented by the first map data 100. The first map data 100 comprises first map road segments 110.

On the right, the second map data 200 is shown. Here, multiple second map road segments 210 are present which may have gaps between them (highlighted by dashed circles). Such gaps may in particular appear at crossings. Also, the roundabout is incorrectly mapped as a crossing. The seemingly connected lines at this crossing may actually be separated from one another. The second map data 200 may in particular be composed of so called "spaghetti" which fragments of roads that do not form crossings with one another but are linear (if not straight but curved linear) strings.

The method according to the first aspect may enable an update of the first, morphologically correct map data 100, with the second positionally correct yet topologically flawed second map data 200. To improve a first map data (e.g., "reference map") which contains roads and other mapped elements, an external geometry may be used (e.g., from (GPS or similar) probes or from satellite images) as a second map data (e.g., "target map"), having better accuracy. The first map data is supposed to have good data integrity, it may contain a graph of topology with nodes and a full set of road attributes. The second map data may contain (e.g., only) geometry input which, however, is assumed to have better accuracy than the first map data. Yet, no attributes (e.g., road types) and no full data integrity is provided by the second map data, e.g., roads may be disconnected, cover only a part of roads, and/or may not always be integrated across nodes.

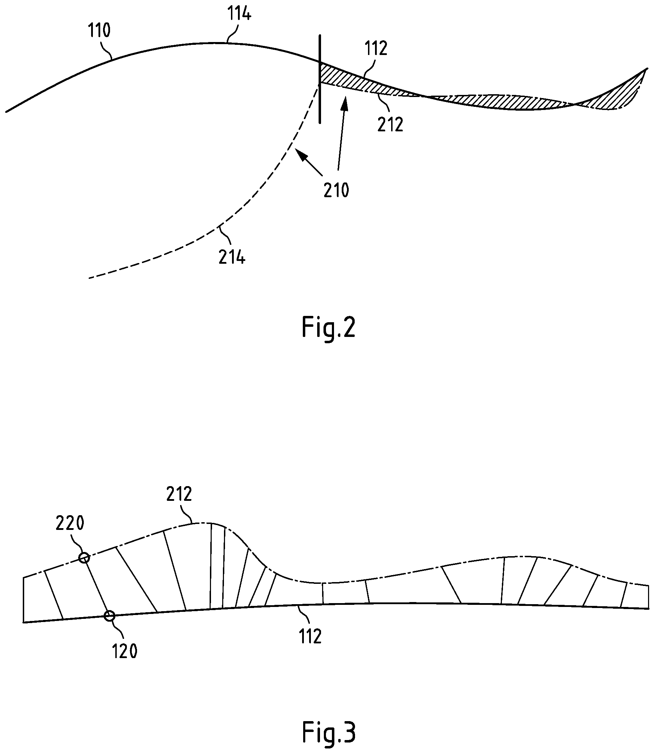

Fig. 2 shows a first map road segment 110 and a second map road segment 210. Also shown is a matched part of the two road segments 110, 210 on the right, comprising a matched first map road segment 112 and a matched second map road segment 212. Also shown are an unmatched first map road segment 114 and an unmatched second map road segment 214. The matching of road segments may be performed based on the location of the first and second map road segments. When they are in similar locations, a match may be confirmed. For instance, Fig. 2 shows that the first 110 and second 210 map road segments deviate from the transition between matched 112, 212 and unmatched 114, 214 map road segments. The matching algorithm may determine, inter alia, based on such a deviation (e.g., including the distance and or the abruptness of a start of the deviation) that the two segments are no longer to be matched. The update will be performed to the matched first map road segment 112 based on the matched second map road segment 212.

Fig. 3 then shows a registration between the matched first map road segment 112 and the matched second map road segment 212. As can be seen, the first map road segment 112 is drawn as a straight line. This may be the actual course of the matched first map road segment 112 or a drawing choice wherein the matched first map road segment 112 has been straightened (e.g., by a coordinate transformation). The matched second map road segment 212 has a different trajectory compared to the matched first map road segment 112. For updating the matched first map road segment 112, a registration has to be carried out, wherein any given point 120 of the matched first map road segment 112 is related to a corresponding point 220 on the matched second map road segment 212. For instance, for a given point 110 on the matched first map road segment 112, a given point 210 is found on the matched second map road segment 212 in such a way that a respective angle between the connecting line between the points 120, 220 and the matched first and second map road segment 112, 212 in the area of the respective points 120, 220 is as close to 90° as possible.

The points 120, 220 may for instance be spaced equidistantly across one of the matched first or the second map road segment 112, 212.

Registering as shown in Fig. 3 allows to establish a pointwise correspondence between the matched first and second map road segment 112, 212. It also allows to determine a point distance between the points (e.g., here point 120 and 220) and thus a computation of a correction factor based on such a point distance.

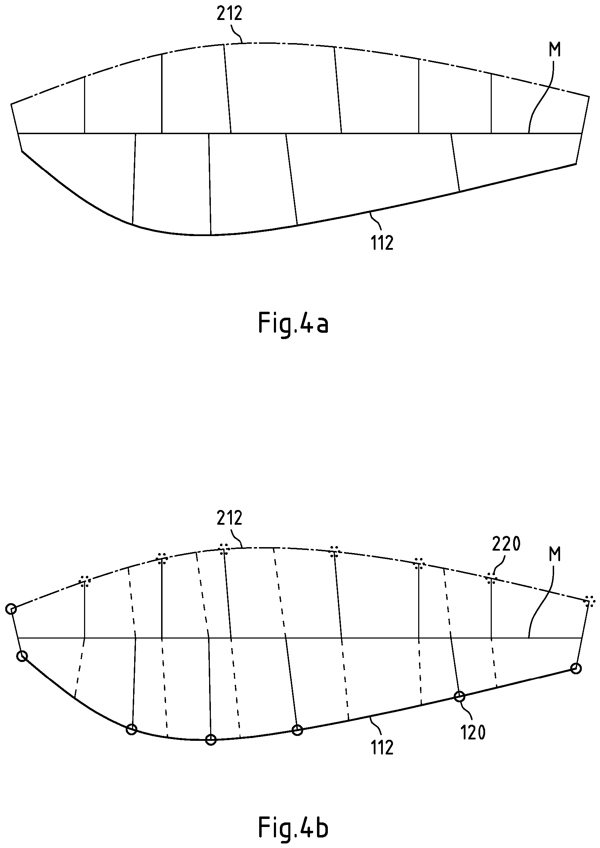

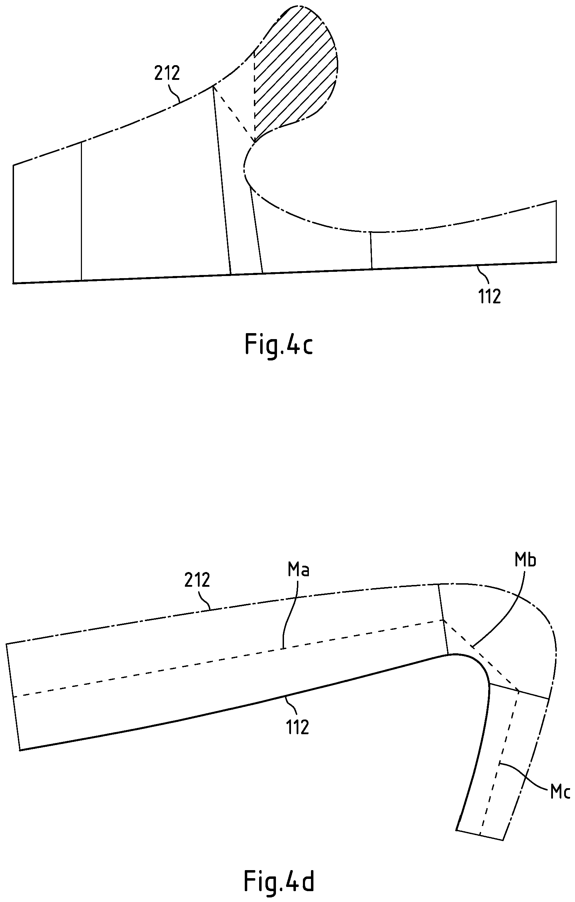

Fig. 4 demonstrates a simple yet effective registration approach. Between a matched first road segment 112 and a matched second road segment 212 a middle line M is drawn. The middle line M may serve as a reference to devise a shared "time" variable that increases monotonically as one follows either the matched first 112 or the matched second map road segment 212.

Fig. 4a demonstrates a registration of both matched first 112 and second 212 map road segments onto the middle line M.

Based on these individual registrations, for any given point 120 or 220 on the matched first or second map road segment 120, 220, a corresponding point on the respective other of the matched first or second map road segment 220, 120 may be found by continuing along the line between the respective point 120, 220 and the middle line M towards the respective other of the matched first or second map road segment 220, 120. This step is shown in Fig. 4b, wherein the continuations of the lines are dashed. Thereby, a correspondence between any location on the matched first map road segment 112 and the matched second map road segment 212 may be established. The distance between locations may be used in the updating step.

The approach of Fig. 4a,b extends to invisible parts of the matched first and second map road segments 112, 212 which are ignored as shown in Fig. 4c. The invisible part shown as shaded area is not connectable directly to the middle line M and is thus discarded.

Fig. 4d elaborates on a straightforward solution to extent the middle-line-approach to narrow curves. Here, the matched first and second map road segments 112, 212 and middle lines are broken up into chunks so that the middle line does not intersect with the first or second map road segments 112, 212. The chunks may then be processed as visualized in Fig. 4a-c.

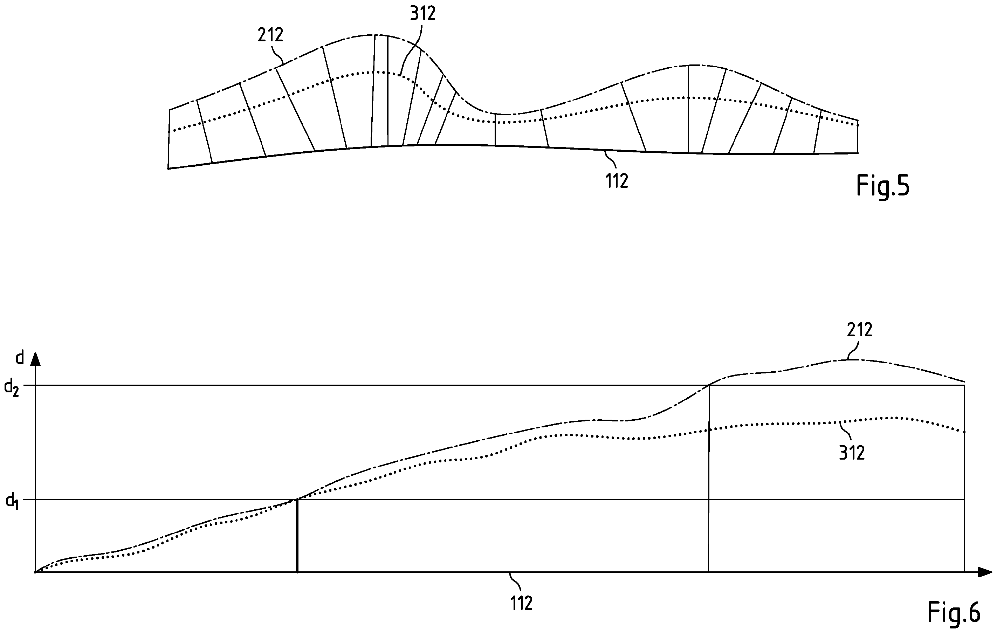

Fig. 5 corresponds to Fig. 3 but adds an updated first map road segment 312 in between the matched first and second map road segments 112, 212. As can be seen the correction of the original matched first map road segment 112 by the matched second map road segments 212 is stronger for parts of the segments which are closer together (i.e., lower point distance) than for parts which are further apart (i.e., higher point distance).

This effect is caused by the magnetic function and is more clearly visualized in Fig. 6. The y-axis of Fig. 6 is the point distance d between the matched first map road segment 112 and the matched second map road segment 212. The x-axis is a distance along the matched first map road segment 112 and the matched second map road segment 212 (or, for instance, along a middle line M). For point distances below a first point distance threshold d₁, the correction factor may be set to a maximum, e.g. of 1, and the updated first map road segment 312 is set to the position of the matched second map road segment 212, whereas the matched first map road segment 112 is basically discarded. This behavior is termed "magnetic" within the present disclosure.

For point distances d above the threshold d₁ and below a second threshold d₂, the value of the correction factor is decreased monotonically with increasing point distance d. Above d₂, the correction factor may be constant (i.e., independent of further distance increases) at a minimum value.

The influence of the matched second map road segment 212 on the updated first map road segment is thus maximally strong for low point distances and diminishes with increasing point distances wherein the influence of the matched first map road segment 112 rises again. For high point distances (d > d₂), the influence of the matched second map road segment 212 on the updated first map road segment 312 is at its minimum.

For instance, matched second map road segment 212 and matched first map road segment 112 may contribute equally in this case.

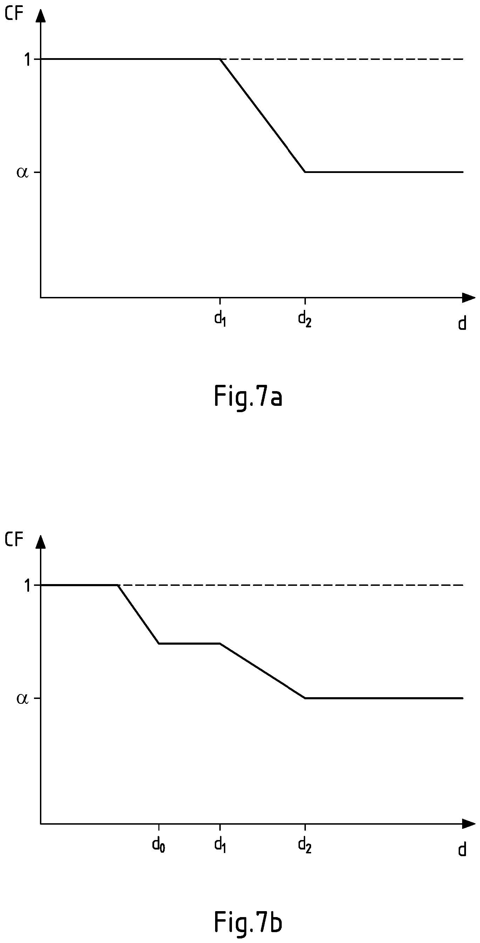

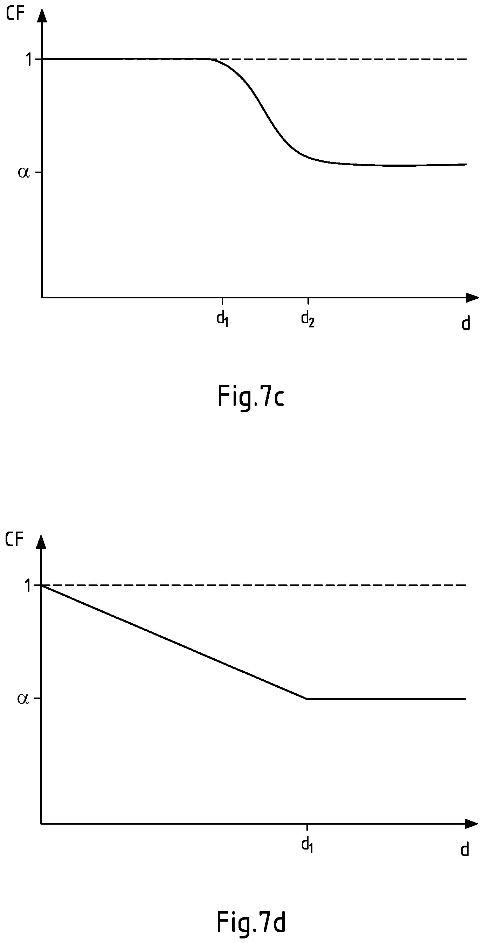

This and further characteristics of the monotonically decreasing magnetic function and the corresponding correction factor CF are visualized in Fig. 7. Fig. 7a corresponds to what has been described with reference to Fig. 6. The minimum correction factor α may be set to 0.5 for instance or a lower or high value. Fig. 7b comprises another plateau at intermediate point distances d₁ < d < d₂ but still is solely composed of plateaus and linear sections. Fig. 7c then is a variant of Fig. 7a with a non-linear transition zone between d₁ < d < d₂. Fig. 7d is a counter example of a non-magnetic monotonically decreasing function wherein the plateau for point distances between 0 and a first point distance threshold is missing.

The proposed approach which may be termed "Iterative Magnetic Adjustment" and is a way of geometry merging and creating smooth transitions (without steps and breaks in the typical road geometry introduced by an alignment algorithm). Matching segments within a defined threshold (good fit) will be fully replaced by external geometries (like magnets) - assuming the new geometries are slightly better representing the reality. As the distance becomes more, the matched parts will be partially changed and an average representing geometry is calculated.

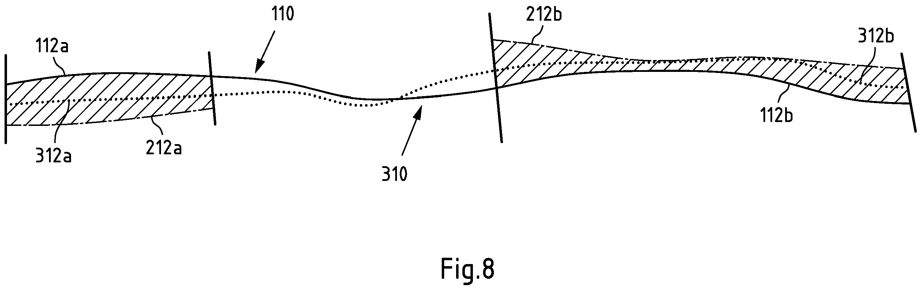

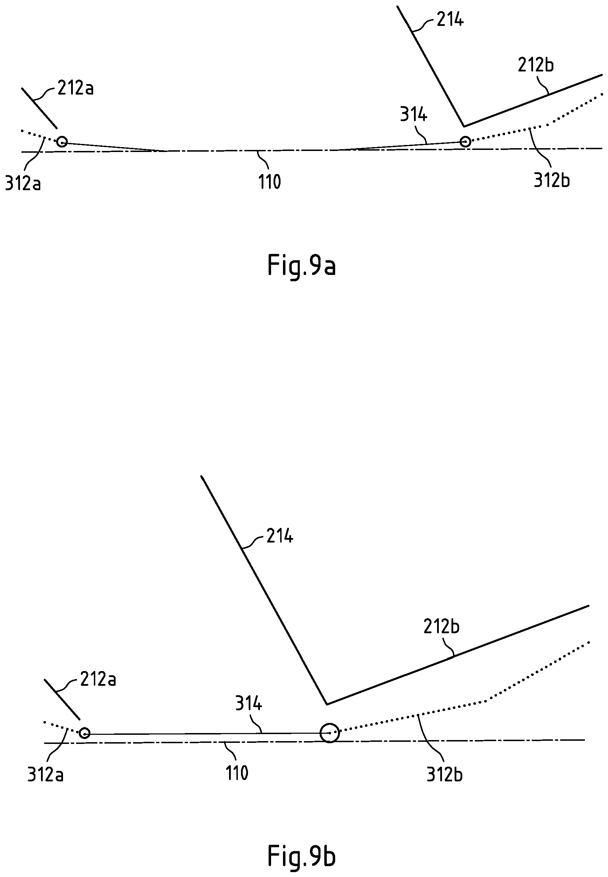

Fig. 8 shows a desired result of an update of a first map, in particular a first map road segment 110 to an updated first map road segment 310 according to the invention. The matched sections with matched first 112a, 112b, second 212a, 212b map road sections and resulting updated matched first map road sections 312a, 312b are separated by an unmatched gap. Still, a smooth transition of the updated first map road section 310, even in the unmatched section in the middle, is desired and achieved. This is done by smoothing as illustrated in the following Fig. 9.

Fig. 9 shows a gap as the one of Fig. 8 in the middle. The updated matched first map road segments 312a, 312b do not end exactly on the previous first map road segment 110 at the transition between matched and unmatched segments but instead there exists a gap due to the update. To smooth out such gaps, a smoothing step is performed in which unmatched first map road segment (shown as part of the entire first map road segment 110) is smoothed into an unmatched part of the updated first map road segment 314 to achieve a smooth continuation of the updated first map road segments 312a, 312b into the unmatched middle zone. The unmatched zone of Fig. 9a has a sufficient length so that the unmatched part of the updated first map road segment 314 reaches the original first data road segment 110 and the smoothing zones are only present at the edges of the unmatched zone. On the other hand, Fig. 9b illustrates a case in which the length of the unmatched zone is too short for a meaningful smoothing so that the updated first map road segment in the unmatched part 314 is simply realized by a straight connection.

Smoothing of the shape in gaps may improve the quality of the shape of the road segment. There may for instance be the following two attributes used in a configuration for smoothing. An angle tolerance (e.g., 15°) may limit an angle that transition between updated segment geometry (it corresponds to a turning angle 165°) and original geometry. A smoothing distance may set a length of the transitioning line between the end of the unmatched zone and the end of smoothing zone. The smoothing distance may for instance be set to 15 m.

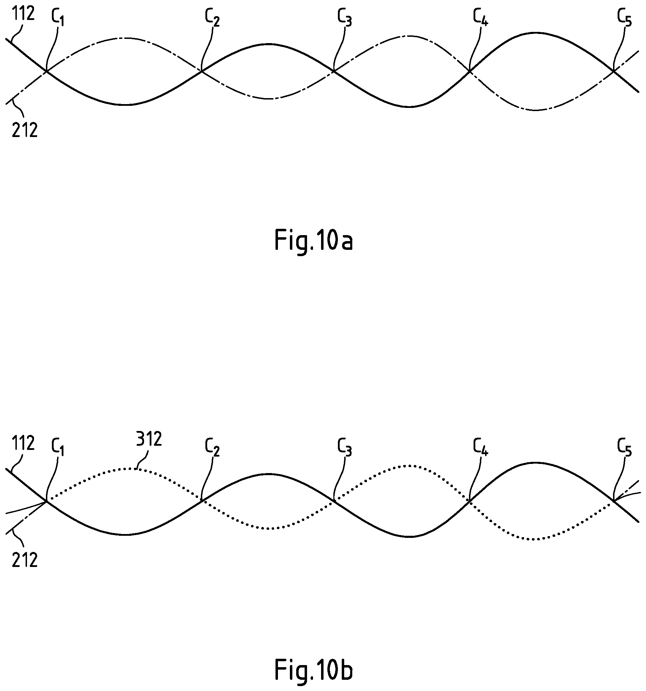

Fig. 10a,b show the case in which at least two (here, 5) crossing points c₁, c₂, c₃, c₄, cs exist between the matched first map data road segment 112 and the matched second map data road segment 212. IN this case, it may be assumed that the second map data does not introduce any errors due to lack of topological information. Instead, the accuracy of the positional information is assumed and the updated first map road segment 312 is set to the positions of the matched second map data road segment 212 between the crossing points c₁, c₂, c₃, c₄, cs (e.g., all crossing points or a subset of them).

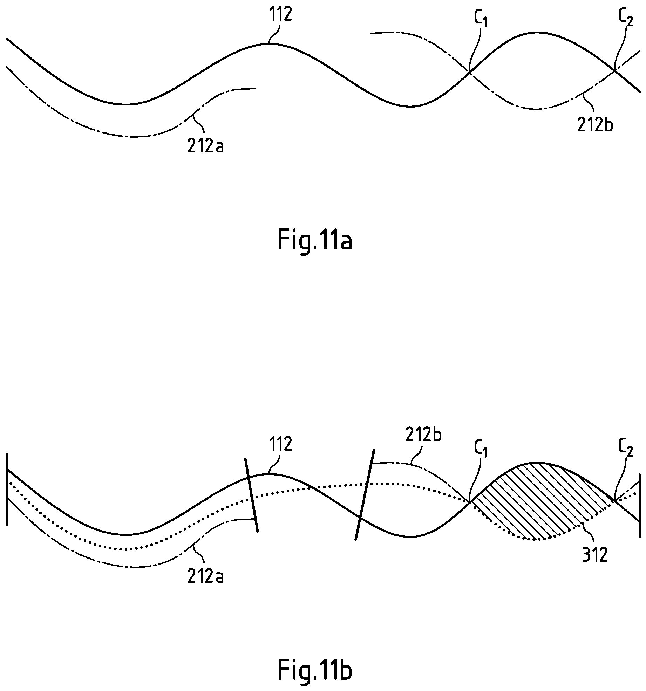

Fig. 11a,b illustrate another example where all proposed approaches are jointly applied.

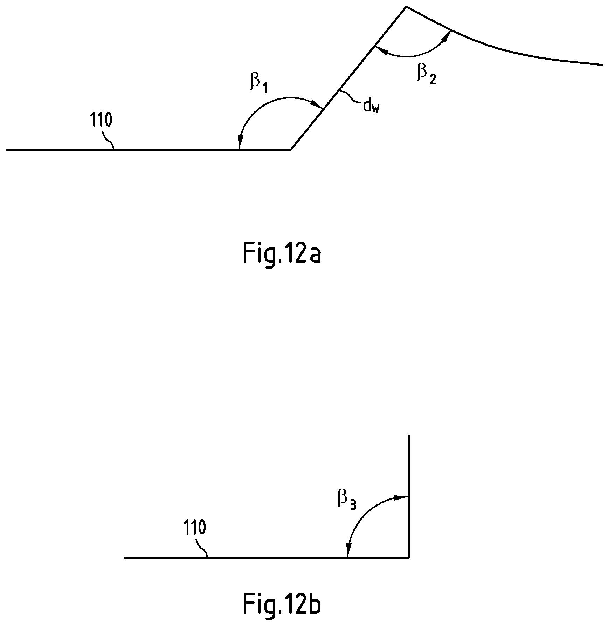

Map data, in particular the updated map data, may be evaluated, e.g., by using an evaluation function. An evaluation function may analyze at least one or more morphological properties of a road segment. Fig. 12a,b illustrated different morphological properties which may be evaluated, for instance the wobble in Fig. 12a. A wobble may be characterized by a first wobble angle β₁, a second wobble angle β₂ and/or by a wobble length d_{w}. Similarly, Fig. 12b shows a sharp turning angle of 90°.

In general, the quality evaluation function may allow to estimate a resulting shape (e.g., of the update first road segment). For instance, unacceptable shape changes may be rejected. Quality evaluation may apply at least one of the following rules.

The first map data, second map data and the updated first map data may be subject to quality evaluation. The updated first map data (e.g., a corresponding road segment) should not have a quality value worse than the first or the second map data (e.g., a corresponding road segment). Different magnetic functions may be tested for updating, e.g., over multiple test-cases. In this way, a magnetic function may be devised that has a good overall, accumulated quality of the updated first map data. The quality evaluation function allows to find an optimal formulation of the magnetic function, giving the best performance. Quality evaluation of a road segment may be calculated as a sum of penalties, e.g., for unexpected or undesirable road segment geometries.

A first example may be a penalty for a sharp angle (e.g., Fig. 12b). A turning angle of more as 90° may incur a penalty. The sharper the angle, the more is a penalty. A wobble may as well lead to a penalty, in particular a wobble more of more than 20m (d_{w}). The shorter is a wobble distance and the sharper is turning angles, the higher the penalty. Also, a penalty may be given for a curvature. For instance, a turning radius R0=12 m may be problematic for a bus. A radius of 5 m becomes problematic for an ordinary car. So, a penalty for a curvature may be formulated as R0/R where R is a turning radius, and R0 is a threshold.

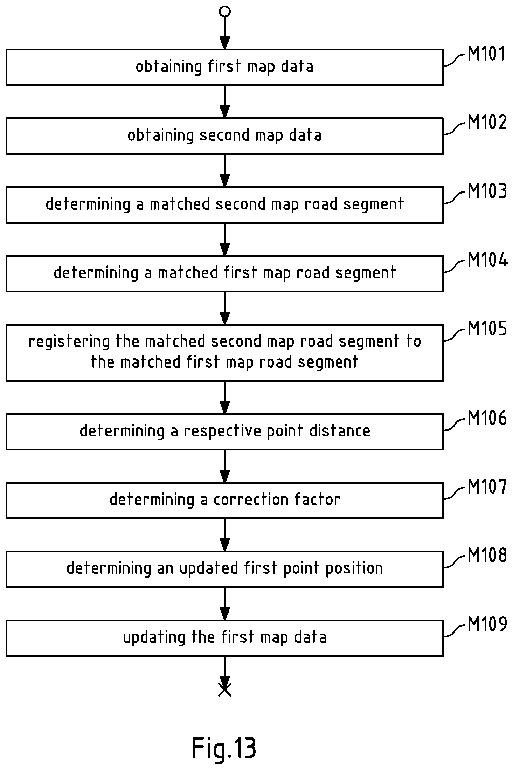

Fig. 13 is a flow diagram illustrating the method according to the first example aspect, for instance performed and/or controlled by an apparatus according to the first and/or second aspect.

A step M101 comprises obtaining (e.g., holding available, retrieving from memory, determining, receiving) first map data (e.g., of a first map, e.g., of a part of a first map) (e.g., comprising at least one road) to be updated.

A step M102 comprises obtaining (e.g., holding available, retrieving from memory, determining, receiving) second map data (e.g., of a second map, e.g., of a part of a second map) (e.g., corresponding to a same and/or at least partially overlapping geographical area as the first map data) (e.g., specifying at least one part of a road) to be used for updating the first map data.

A step M103 comprises determining a (e.g., one or more) matched second map road segment of a road of the second map data (e.g., a coherent piece of a road, e.g., adjacent to and/or between unmatched road segments (e.g., gaps) in the first and/or second map road), wherein the matched second map road segment is matched to a (e.g., one or more and/or by a one-by-one matching of first and second road segments) corresponding matched first map road segment of a road of the first map data (e.g., by matching location, shape, size, road type and/or combinations thereof)(e.g., wherein matched first and/or second map road segments are free of junctions and/or nodes).

A step M104 comprises determining a matched first map segment, wherein the matched first map segment may be determined at the same time and/or in a joint step with the determining of the matched second map road segment.

A step M105 comprises registering (e.g., as part of the matching or as a separate, subsequent step) the matched second map road segment to the matched first map road segment to obtain a set of registered point pairs, wherein a respective point pair of the set of registered point pairs comprises a first point on the matched first map road segment and a second point on the matched second map road segment.

The following steps may be performed for the point pairs (e.g., all or a subset) of the set of point pairs (e.g., wherein a point is defined in 2D or 3D).

A step M106 comprises determining a respective point distance (e.g., absolute, e.g., in a measure of distance such as e.g. meter or feet) between the first point and the second point of the point pair.

A step M107 comprises determining a correction factor (e.g., between 1 and a minimum correction factor, e.g., 0.5) as a monotonically (e.g., simple monotonic, not strict) decreasing magnetic function of the point distance.

A step M108 comprises determining an updated first point position by interpolating between the first point and the second point based on the correction factor (e.g., updated first point = first point + (second point - first point) multiplied by correction factor).

A step M109 comprises updating (e.g., point-by-point or after updating (e.g., all of) the points of the set of point pairs) the first map data by updating the first map road segment by replacing the first point position with the updated first point position.

Steps M107, M108, M109 may be repeated for all points of the set of point pairs.

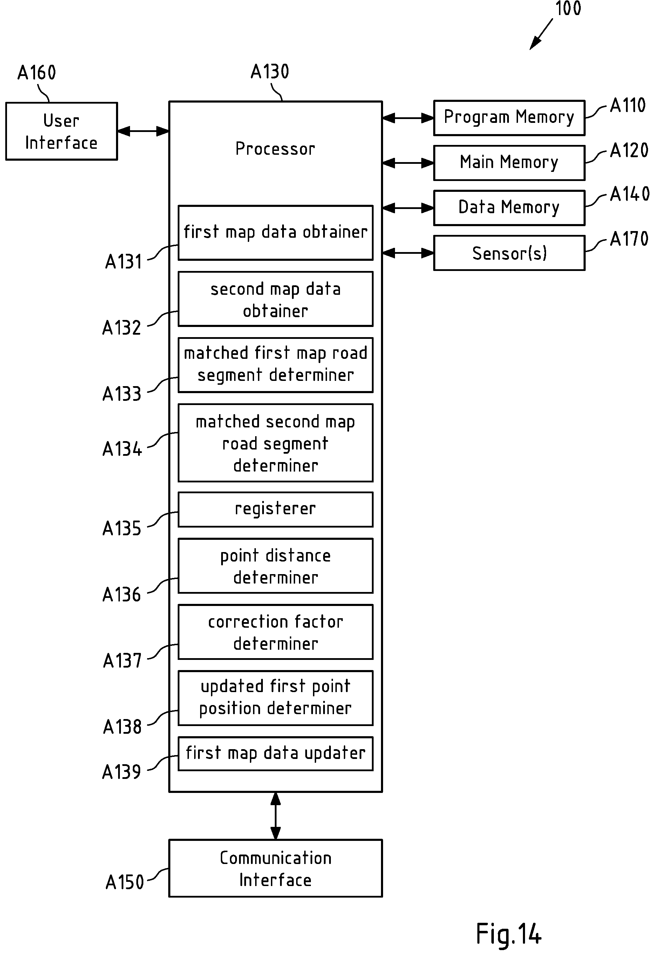

Fig. 14 is a schematic block diagram of an apparatus 1 according to the second and/or third exemplary aspect of the present invention, which may for instance represent a map services provider or a map services consumer.

Apparatus 1 comprises a processor A110, working memory A120, program memory A130, data memory A140, communication interface(s) A150, an optional user interface A160 and an optional sensor(s) A170 in case the apparatus 1 represents the map services consumer of the third aspect.

Apparatus 1 may for instance be configured to perform and/or control or comprise respective means (at least one of A110 to A170) for performing and/or controlling the method according to the first exemplary aspect of the present invention. Apparatus 1 may as well constitute an apparatus comprising at least one processor A110 and at least one memory A120 including computer program code, the at least one memory and the computer program code configured to, with the at least one processor, cause an apparatus, e.g. apparatus 1 at least to perform and/or control the method according to the first exemplary aspect of the invention of the present invention.

Processor A110 may for instance comprise a first map data obtainer A131 as a functional and/or structural unit. Processor A110 may for instance comprise a second map data obtainer A132 as a functional and/or structural unit.

Processor A110 may for instance comprise a matched first map road segment determiner A133 as a functional and/or structural unit. Processor A110 may for instance comprise a matched first map road segment determiner A134 as a functional and/or structural unit.

Processor A110 may for instance comprise a registerer A135 as a functional and/or structural unit.

Processor A110 may for instance comprise a point distance determiner A136 as a functional and/or structural unit.

Processor A110 may for instance comprise a correction factor determiner A137 as a functional and/or structural unit.

Processor A110 may for instance comprise an updated first point position determiner A138 as a functional and/or structural unit.

Processor A110 may for instance comprise first map data updater A138 as a functional and/or structural unit.

Functional units A131-A139 may respectively correspond to the flow chart steps M101-M109 shown in Fig. 13.

Processor A110 may for instance further control the memories A120 to A140, the communication interface(s) A150, the optional user interface A160 and the optional sensor(s) A170.

Processor A110 may for instance execute computer program code stored in program memory A130, which may for instance represent a computer readable storage medium comprising program code that, when executed by processor A110, causes the processor A110 to perform the method according to the first exemplary aspect of the present invention.

Processor A110 (and also any other processor mentioned in this specification) may be a processor of any suitable type. Processor A110 may comprise but is not limited to one or more microprocessor(s), one or more processor(s) with accompanying one or more digital signal processor(s), one or more processor(s) without accompanying digital signal processor(s), one or more special-purpose computer chips, one or more field-programmable gate array(s) (FPGA(s)), one or more controller(s), one or more application-specific integrated circuit(s) (ASIC(s)), or one or more computer(s). The relevant structure/hardware has been programmed in such a way to carry out the described function. Processor A110 may for instance be an application processor that runs an operating system.

Program memory A130 may also be included into processor A110. This memory may for instance be fixedly connected to processor A110, or be at least partially removable from processor A110, for instance in the form of a memory card or stick. Program memory A130 may for instance be non-volatile memory. It may for instance be a FLASH memory (or a part thereof), any of a ROM, PROM, EPROM and EEPROM memory (or a part thereof) or a hard disc (or a part thereof), to name but a few examples. Program memory A130 may also comprise an operating system for processor A110. Program memory A130 may also comprise a firmware for apparatus 1.

Apparatus 1 comprises a working memory 120, for instance in the form of a volatile memory. It may for instance be a Random Access Memory (RAM) or Dynamic RAM (DRAM), to give but a few non-limiting examples. It may for instance be used by processor A110 when executing an operating system and/or computer program.

Data memory A140 may for instance be a non-volatile memory. It may for instance be a FLASH memory (or a part thereof), any of a ROM, PROM, EPROM and EEPROM memory (or a part thereof) or a hard disc (or a part thereof), to name but a few examples. Data memory A140 may for instance store first map data, second map data, updated first map data, a definition of at least one monotonically decreasing magnetic function, point positions, point distances, or a combination thereof, to name but a few non-limiting examples.

Communication interface(s) A150 enable apparatus 1 to communicate with other entities, e.g. with a map services provider of the second example aspect in case apparatus 1 represents a map services consumer, or vice versa. The communication interface(s) A150 may for instance comprise a wireless interface, e.g. a cellular radio communication interface and/or a WLAN interface) and/or wire-bound interface, e.g. an IP-based interface, for instance to communicate with entities via the Internet. Communication interface(s) may enable apparatus 1 to communicate with other entities.

User interface A160 is optional and may comprise a display for displaying information to a user and/or an input device (e.g. a keyboard, keypad, touchpad, mouse, etc.) for receiving information from a user.

Sensor(s) A170 are optional and may for instance comprise a GPS sensor or a LiDAR. Sensor(s) A170 may for instance be comprised by apparatus 1, in case apparatus 1 represent a map services consumer.

Some or all of the components of the apparatus 1 may for instance be connected via a bus. Some or all of the components of the apparatus 1 may for instance be combined into one or more modules.

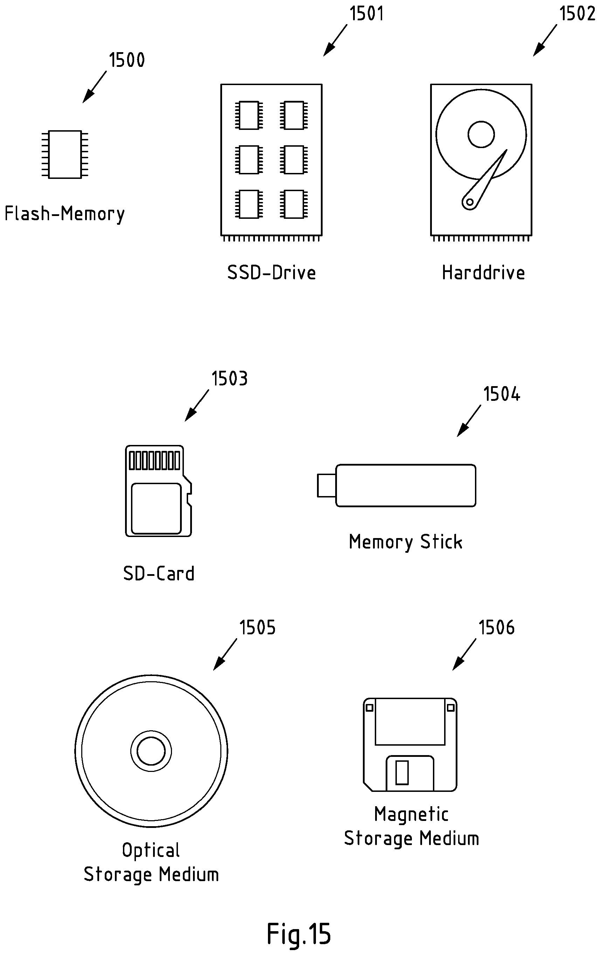

Fig. 15 is a schematic illustration of examples of tangible and non-transitory computer-readable storage media according to the present invention that may for instance be used to implement one or more of the memories A11,0 A120, A140 of Fig. 14. To this end, Fig. 15 displays a flash memory 1500, which may for instance be soldered or bonded to a printed circuit board, a solid-state drive 1501 comprising a plurality of memory chips (e.g. Flash memory chips), a magnetic hard drive 1502, a Secure Digital (SD) card 1503, a Universal Serial Bus (USB) memory stick 1504, an optical storage medium 1505 (such as for instance a CD-ROM or DVD) and a magnetic storage medium 1506.

The invention is thus, instead of a construction of the whole road network using external probes, focused on the improvement of existing mapped road geometries using external data. Several assumptions are made as follows. (1) An existing base road network (first map data) with nodes and edges is available, wherein the first map data has low positional accuracy, limited freshness, yet topological correctness. (2) External geometries (second map data) contain unstructured local fragments of roads without internal overlaps. (3) External geometries have better positional accuracy and freshness than the existing base map. The first map data (e.g., base/ existing geometries) is then improved on a local level using matched parts and the correction of the base geometry in unmatched parts (gaps) to keep smooth transitions.

In the present specification, any presented connection in the described embodiments is to be understood in a way that the involved components are operationally coupled. Thus, the connections can be direct or indirect with any number or combination of intervening elements, and there may be merely a functional relationship between the components.

Moreover, any of the methods, processes and actions described or illustrated herein may be implemented using executable instructions in a general-purpose or special-purpose processor and stored on a computer-readable storage medium (e.g., disk, memory, or the like) to be executed by such a processor. References to a 'computer-readable storage medium' should be understood to encompass specialized circuits such as FPGAs, ASICs, signal processing devices, and other devices.

The expression "A and/or B" is considered to comprise any one of the following three scenarios: (i) A, (ii) B, (iii) A and B. Furthermore, the article "a" is not to be understood as "one", i.e. use of the expression "an element" does not preclude that also further elements are present. The term "comprising" is to be understood in an open sense, i.e. in a way that an object that "comprises an element A" may also comprise further elements in addition to element A.

It will be understood that all presented embodiments are only exemplary, and that any feature presented for a particular example embodiment may be used with any aspect of the invention on its own or in combination with any feature presented for the same or another particular example embodiment and/or in combination with any other feature not mentioned. In particular, the example embodiments presented in this specification shall also be understood to be disclosed in all possible combinations with each other, as far as it is technically reasonable and the example embodiments are not alternatives with respect to each other. It will further be understood that any feature presented for an example embodiment in a particular category (method/apparatus/computer program/system) may also be used in a corresponding manner in an example embodiment of any other category. It should also be understood that presence of a feature in the presented example embodiments shall not necessarily mean that this feature forms an essential feature of the invention and cannot be omitted or substituted.

The statement of a feature comprises at least one of the subsequently enumerated features is not mandatory in the way that the feature comprises all subsequently enumerated features, or at least one feature of the plurality of the subsequently enumerated features. Also, a selection of the enumerated features in any combination or a selection of only one of the enumerated features is possible. The specific combination of all subsequently enumerated features may as well be considered. Also, a plurality of only one of the enumerated features may be possible.

The sequence of all method steps presented above is not mandatory, also alternative sequences may be possible. Nevertheless, the specific sequence of method steps exemplarily shown in the figures shall be considered as one possible sequence of method steps for the respective embodiment described by the respective figure.

The invention has been described above by means of example embodiments. It should be noted that there are alternative ways and variations which are obvious to a skilled person in the art and can be implemented without deviating from the scope of the appended claims.

## Claims

1. Method for updating a map, comprising
- obtaining first map data to be updated;
- obtaining second map data to be used for updating the first map data;
- determining a matched second map road segment of a road of the second map data, wherein the matched second map road segment is matched to a corresponding matched first map road segment of a road of the first map data;
- registering the matched second map road segment to the matched first map road segment to obtain a set of registered point pairs, wherein a respective point pair of the set of registered point pairs comprises a first point on the matched first map road segment and a second point on the matched second map road segment;
- for the point pairs of the set of point pairs,
- determining a respective point distance between the first point and the second point of the point pair,
- determining a correction factor as a monotonically decreasing magnetic function of the point distance,
- determining an updated first point position by interpolating between the first point and the second point based on the correction factor, and
- updating the first map data by updating the first map road segment by replacing the first point position with the updated first point position.

2. The method according to claim 1, wherein
- the first map data and the second map data at least partially represent a same geographical area,
- the first map data has a higher topological correctness than the second map data, and/or
- the first map data has lower positional accuracy and/or is outdated with respect to the second map data.

3. The method according to claim 1 or 2, wherein
- the second map data is based on at least one of a GPS probe, a satellite image, or a light detection and ranging, Lidar, survey, and/or
- the second map data is unstructured and/or topologically inconsistent and/or comprises fragments of roads.

4. The method according to any of claims 1 to 3, wherein the correction factor is at least one of
- set to a maximum correction factor for a point distance below a first point distance threshold,
- set according to a decreasing function of the point distance for a point distance above the first threshold,
- set to a minimum correction factor for a point distance above a second point distance threshold, or
- set according to a piecewise function of the point distance.

5. The method according to any of claims 1 to 4, further comprising
- evaluating the updated first map data according to a quality evaluation function, in particular wherein the quality evaluation function at least one of
- is based on a shape of to the updated first map road segment, a shape of the matched first map data road segment and/or a shape of the matched second map data road segment, in particular comprises a comparison between a shape of to the updated first map road segment, a shape of the matched first map data road shape and/or a shape of the matched second map data road shape;
- is evaluated at least twice for a respective updated first map road segment, wherein the at least two respective updated first map road segments are obtained based on mutually different magnetic functions;
- is based on at least one penalty on at least one of
- sharp angles,
- wobbles, or
- curvatures.

6. The method according to any of claims 1 to 5, further comprising
- determining at least one unmatched first road segment adjacent to the matched first road segment.

7. The method according to any of claims 6, further comprising
- smoothing a transition between the matched first road segment and the at least one unmatched first road segment, in particular wherein
- the matched first road segment is left unchanged by the smoothing and/or the smoothing is applied to the at least one unmatched first road segment;
- the smoothing is based on at least one maximum allowed shape value, wherein the maximum allowed shape values comprise at least one of a maximum allowed angle or a maximum allowed smoothing distance;
- the update of the first road segment is discarded in case the smoothing fails to comply with the at least one maximum allowed shape value.

8. The method according to any of claims 1 to 7, further comprising
- repeating the actions of the method, wherein the updated first map data is used as the first map data and a new third map data is used as the second map data.

9. The method according to any of claims 1 to 8, further comprising
- determining whether the first road segment and the second road segment cross one another in at least two crossing points and if yes, setting the correction factor to the maximum correction factor for at least one part of the first map road segment between at least two consecutive of the crossing points.

10. The method according to any of claims 1 to 9, wherein
- determining the correction factor is exclusively based on the first and second map data.

11. A map services provision apparatus comprising means for performing and/or controlling the method according to any of claims 1 to 10.

12. The map services provision apparatus according to claim 11 further comprising
- means for providing at least one map service based on the updated first map data to a map services consumer apparatus.

13. A map services consumer apparatus comprising means for performing and/or controlling the method according to any of claims 1 to 10.

14. The map services consumer apparatus according to claim 13,
- wherein the second map data is collected at least partially by the map services consumer apparatus and/or
- further comprising means for determining at least one route based on the updated first map data.

15. A computer program comprising instructions, which, when executed by an apparatus, cause the apparatus to perform the method of any one of claims 1 to 10.

16. A computer-readable storage medium having stored thereon the computer program of claim 15.
